# EUROPÄISCHE PATENTANMELDUNG

(11) **EP 0 755 996 A1**
(43) Veröffentlichungstag der Anmeldung: **29.01.1997**
(21) Anmeldenummer: 96810473.7
(22) Anmeldetag: 18.07.1996
(51) Int. Cl.: C10L 1/02, C10L 1/14, C10L 1/18

(54) **Neuer schwefelarmer, additivierter Diesel Kraftstoff mit verbesserter Schmierwirkung und erhöhter Dichte**

(30) Priorität: 25.07.1995 CH 2178/95
(71) Anmelder: AGROGEN-STIFTUNG, CH-1701 Fribourg (CH); K-MIDT GmbH, CH-1701 Freiburg (CH)
(72) Erfinder: Knopf, Ulrich C., Dr., 1701 Freiburg (CH)

(57) **Zusammenfassung**

Die Erfindung betrifft ein umweltfreundlicher, additivierter, entschwefelter Kraftstoff für konventionelle Dieselmotoren, der vorwiegend aus mineralischen Kohlenwasserstoffen und zu einem geringeren Anteil aus einem Additiv besteht, das zum Einen und vorwiegend aus Planzenöl besteht, zum Anderen und geringeren Anteil aus einem Zündiwlligkeitsverbesserer. Mit dem Additiv können Dichte und die Schmierwirkung von entschwefeltem, mineralischen Diesel-Kraftstoff erhöht, der Schwefelgehalt weiter vermindert werden ohne dabei die Zündwilligkeit bzw. die Cetanzahl herabzusetzen.

## Beschreibung

Dieselkraftstoffe auf Mineralölbasis bestehen aus einem Gemisch verschiedener Kohlenwasserstoffe mit Siedebereich von ca. 170 - 360 ° C. Normalerweise enthält Diesel bis zu 0,8 % schwefelhaltige Verbindungen. Schwefelhaltige Verbindungen in Teibstoffen die für Verbrennungsmotoren bestimmt sind, sind aber problematisch weil ihre Verbrennung die Bildung von Schwefeloxiden zur Folge hat. Aus diesen entstehen in der Umwelt in Verbindung mit Wasser Säuren und saure Verbindungen, die für den Boden und die Pflanzen (insbesondere die Wälder) äusserst problematisch bzw. schädlich sind. Es ist deshalb verständlich, dass im Hinblick auf den Schutz der Umwelt mehr und mehr gefordert, oder vorgeschrieben wurde, dass Dieselkraftstoffe nur noch einen kleinen (gemäss der Norm EN 590 in der Schweiz unter 0,05 %) Prozentgehalt von Schwefelverbindungen enthalten dürfen. Deshalb werden Dieselkraftstoffe in den Raffinerien heute grossen Teils entschwefelt. Je nach Entschwefelungsverfahren, werden aber zusammen mit dem Schwefel auch andere Substanzen entfernt, insbesondere sog. polare Verbindungen, die eine gewisse Schmierwirkung auf mechanische Motorenteile haben. So hat sich seit einiger Zeit beim Gebrauch von stark entschwefelten Diesel-Kraftstoffen gezeigt, dass die Schmierwirkung aber auch der Verbrauch und das Startverhalten bei heissem Motor - zum Mindesten bei bestimmten Motoren - ungenügend wurden. Das erstere kann nach 200 bis 1500 Betriebsstunden zu bedeutenden mechanischen Schäden an Motorenbestandteilen, insbesondere den Einspritzpumpen, führen. Dies insbesondere bei Motoren die mit sog. Verteilerpumpen ausgerüstet sind, weil diese bekanntlich direkt durch den Kraftstoff geschmiert werden. Verteilerpumpen werden vor allem bei Motoren mittlerer und kleiner Leistung (Personenkraftwagen, kleine Transporter und Traktoren) eingesetzt. Das Problem besteht nicht, bei Dieselmotoren, die mit sog. Reihenpumpen ausgrüstet sind, weil diese im Gegensatz zu den Verteilerepumpen durch das Motorenöl geschmiert werden.

Der Verbrauch und die Leistung von Dieselkraftstoffen hängt auch von der Dichte ab. Schwefelarme Dieselkraftsoffe haben heute in der Schweiz eine Dichte von 800 - 845 kg/m³ im Winter und 820 - 860 kg/m³ im Sommer. Gemäss Messungen auf dem Prüfstand bewirkt eine Herabsetzung der Dichte um nur 10 Punkte bereits eine Minderung der Leistung um ca. 2 % und eine Erhöhung des Verbrauchs um 0,8 - 1,4 %. Eine Erhöhung der Dichte durch mineralische Komponenten führt dagegen meistens zu einer vermehrten Russ (Rauch-)-Entwicklung.

Wo bei hohen Aussentemperaturen Dieselkraftstoffe von geringer Dichte (unter 820 kg/m³) verwendet wurden tauchten ebenso Probleme beim Heissstart von Motoren auf. Da die Einspritzpumpen volumetrisch fördern, kann bei geringer Dichte die zugeführte Energie ungenügend werden und es können entsprechende Probleme beim Start entstehen.

Unsere Erfindung betrifft deshalb ein Kraftstoff für Dieselmotoren dessen Schmierfähigkeit und Dichte durch ein Additiv auf Pflanzenölbasis erhöht werden und gleichzeitig der Schwefelgehalt, nicht aber die Cetanzahl, vermindert werden.

Pflanzliche Öle sind Triglyzeride, bzw. Ester des dreiwertigen Alkohols Glyzerin und von höheren Fettsäuren. Sie bestehen wie die Komponenten des Erdöls aus den chemischen Elementen Kohlenstoff und Wasserstoff, enthalten jedoch zusätzlich auch noch Sauerstoff. Pflanzliche Oele unterscheiden sich von den mineralischen Oelen in weiteren chemischen und physikalischen Eigenschaften (vgl. dazu Tabelle 1).

**Tabelle 1:**

| Chemische und physikalische Eigenschaften von Treibstoffen auf Pflanzenöl Basis im Vergleich mit mineralischem Diesel | | | | |
|---|---|---|---|---|
| | Mineral. Diesel | Rapsöl kaltgepresst | Rapsöl Alkohol Benzin Gemisch | RME |
| Dichte p (15° C) g/cm³ | 0,85 | 0,92 | 0,89 | 0,88 |
| Visk. v (20° C) mm²/s | 4,7 | 67 | 19,8 | 6,5-8 |
| Heizwert Hᵤ MJ/kg | 43,6 | 37,3 | 37,4 | 36,4 |
| Flammpunkt °C | 60 | 200 | 77 | 55 |
| Cetanzahl | 51 | 41 | 39 | > 48 |
| Schwefel Gew. % | 0,20 | 0.0012 | < 0.0012 | 0,0012 |
| Gesamtphosphat mg/kg | - | 8-22 | < 8-22 | < 8-22 |

Es ist bekannt, dass seit einiger Zeit auch pflanzliche Oele als Kraftstoffe in Dieselmotoren eingesetzt werden. Im Hinblick auf diesen Verwendungszweck fällt im Vergleich zu mineralischem Diesel auf (Tabelle 1), dass pflanzliche Oele eine bedeutend höhere Viskosität, Dichte und Flammpunkt, sowie eine tiefere Cetanzahl, einen tieferen Heizwert und einen Schwefelgehalt der gegen 0 geht, aufweisen.

Pflanzliche Oele von einem bestimmten Raffinationsgrad können rein und ohne nennenswerte Aenderungen an den Motoren bereits heute als Kraftstoff in konventionellen, indirekt eingespritzten Dieselmotoren (sog. Vorkammer Motoren) eingesetzt werden.

Beim heutigen Stand der Technik ist es dagegen nicht möglich pflanzliche Oele rein und unverändert auch in konventionellen, direkt eingespritzten Dieselmotoren zu verbrennen. Dagegen ist dies mit speziell angepassten Diesel-Motoren (z.B. in den sog. Elsbett Motoren) möglich. Solche sog. Vielstoff-Motoren und ihre Zusatzgeräte - insbesondere die Einspritzvorrichtungen - werden so ausgelegt bzw. modifiziert, als dass sie pflanzliches Oel von einem bestimmten Raffinationsgrad trotz erhöhter Viskosität, erhöhtem Flammpunkt und tieferer Cetanzahl optimal verbrennen bzw. in Kraft umsetzen können.

Ebenso ist es möglich pflanzliche Oele als Kraftstoffe in bestehenden, konventionellen Dieselmotoren einzusetzen, nachdem sie entweder chemisch modifiziert, oder/und dem Oel bestimmte andere chemische Stoffe zugesetzt wurden.

Einer dieser modifizierten Kraftstoffe auf Pflanzenölbasis ist der sog. Rapsmethylester (abgekürzt RME). Rapsmethylester wird aus Rapsöl hergestellt, indem man den dreiwertigen Alkohol Glyzerin unter Einfluss eines Katalysators durch den einwertigen Alkohol Methanol ersetzt. Das durch die Umesterung ausgefällte Glyzerin wird abdekantiert, oder abzentrifugiert und es bleibt die übergelagerte Phase, der Rapsmethylester. Der so hergestellte Rapsmethylester hat eine deutlich niedrigere Viskosität als reines pflanzliches Oel, mit eine-r/m leicht höheren Dichte als diejenigen des mineralischen Diesels und einem Flammpunkt sowie einer Cetanzahl die in etwa denjenigen des Dieselkraftstoffes entsprechen (vgl.Tablle 1). So kann er unter Einhaltung gewisser Vorsichtsmassnahmen (er greift konventionelle Gummidichtungen und Lacke an) bei Temperaturen die vorteilhafterweise über 0°C liegen, in konventionellen, sowohl indirekt wie auch direkt eingespritzten Dieselmotoren als Kraftstoff verwendet werden. In Bezug auf die hier beschriebene Erfindung liegt der Nachteil des mit einem einwertigen Alkohl umgeesterten Rapsmethylester aber darin, als mit der Umesterung auch Viskosität und damit die Dichte und damit auch die Schmierwirkung gegenüber dem nativen pflanzlichen Oel herabgesetzt werden, was seine Eignung als schmierende Additiv Komponente mindert. Zudem braucht es zur Herstellung des Rapsmethylesters eine relativ kostspielige Umesterungsanlage. Schliesslich ist nachteilig, dass für das in der Umesterung erhaltene Glyzerin eine separate Verwertungs- oder Entsorgungslinie aufgebaut werden muss.

Weitere Diesel-Substitute die vorwiegend auf Pflanzenölbasis hergestellt werden, wurden in den Offenlegungsschriften WO 95/09219 und DE-PS 41 16 905 beschrieben. Dabei handelt es sich im Wesentlichen um Alternativ-Treibstoffe die ein Gemisch von pflanzlichem Oel (60 - 88 Vol. %), 6 - 20 Vol. % mindestens eines geradkettigen oder verzweigten Monoalkohols mit 1 bis 10 Kohlenstoffatomen und zudem Benzin (6 - 20 Vol. %) enthalten. Durch die Zusätze von Alkohol und Benzin werden die Viskosität von reinem pflanzlichen Oel einerseits und die Dichte andererseits, herabgesetzt. Entsprechend sind diese Kraftstoffe wie die Erfahrungen und Prüfungen zeigen für den Betrieb von konventionellen vorwiegend indirekt eingespritzten Dieselmotoren geeignet. Bei konventionellen direkt eingespritzten Dieselmotoren, können aber aus der Verbrennung auch solcher Gemische je nach Formulierung Rückstände entstehen, die früher oder später zu Ablagerungen bzw. Krustenbildung an den Einspritzdüsen und den Kolbenringen und infolgederen zu Motorenschäden führen können.

Unsere Erfindung betrifft einen Kraftstoff der sowohl in direkt wie indirekt eingespritzten Dieselmotoren verwendet werden kann, vorwiegend aus mineralischen Kohlenwasserstoffen im Siedebereich 170 - 360 ° C besteht und nur einen varierbaren Anteil von pflanzlichen Triglyzeriden enthält der vorteilhafterweise unter 20 Vol. % liegt.

Unsere Erfindung beruht zum Einen auf der Erkenntis, dass gewisse pflanzliche Oele, insbesondere Rapsöl, vorzügliche Schmiereigenschaften haben; deshalb und wegen ihrer biologischen Abbaubarkeit verwendet man sie seit längerem bereits für die sog. Verlustschmierung d.h. für die Schmierung von Ketten und Sägen (im Walde), Bohrern und Schneidewerkzeuge (in der Metallverabreitung) usw.. Da aber pflanzliche Oele - im Gegensatz zu mineralischen Oelen - praktisch keinen Schwefel enthalten, belastet ihr Zusatz zu Dieselkraftstoffen die Umwelt nicht. Im weiteren wirkt sich die höhere Dichte pflanzlicher Oele positiv auf die Dichte des Diesel/Pflanzenölgemisches und damit auf die Leistung und den Verbrauch der Dieselmotore aus. Zwar ist der spezifische Heizwert der meisten Pflanzenöle um etwa 12 % geringer als derjenige von mineralischem Dieselkraftstoff; weil aber die Dichte um ca. 10 % grösser ist als diejenige von mineralischem Dieselkraftstoff und der Kraftstoff bei Dieselmotoren volumetrisch dosiert wird, ist der Energieinhalt der dem Motor zugeführten Pflanzenölmenge nur um etwa 1 bis 2 % geringer als derjenige des mineralischen Dieselkraftstoffes. Damit ist die Voraussetzung gegeben, dass durch Zumischen einer Pflanzenölkomponente zu mineralischem Dieselkraftstoff ohne Aenderung der Einspritzanlage etwa gleiche Leistungs- und Momentenwerte wie beim reinen, mineralischen Dieselkraftstoff erzielt werden können.

Es ist aber auch bekannt (vgl. Tabelle 1), dass pflanzliche Oele eine tiefere Cetanzahl und einen höheren Flammpunkt aufweisen als mineralischer Diesel, was generell zu einer Verschlechterung der Verbrennung und/oder der Abgassituation führt. Ersteres trägt wesentlich dazu bei, dass Kraftstoffe auf reiner, unveränderter Pflanzenölbasis, oder aber Gemische mit einem hohen prozentualen Anteil von Pflanzenölen für direkt eingespritzte Dieselmotoren ungeeignet sind (vgl. oben). Der Nachteil der tieferen Cetanzahl wird beim erfindungsgemässen Diesel-Kraftstoff so behoben, als zu der im Additiv quantitativ bedeutenderen Pflanzen-Oel Komponente zusätzlich eine zweite Komponente, nämlich ein konzentrierter Zündwilligkeitsverbesserer zugegeben wird. Durch diesen kann die tiefere Cetanzahl des Diesel- Pflanzenölgemisches kompensiert bzw. der Verbrennungsvorgang und die Abgas situation verbessert werden. Ablagerungen an Motorenteilen können so vermieden werden. Zündwilligkeitsverbessernd bzw. Cetanzahl erhöhend wirken vor allem die Ester der Salpetersäure bzw. Nitrat-Verbindungen zum Beispiel:
n-Butylnitrat,
Cyclohexylnitrat,
n-Decylnitrat,
Diethylenglykoldinitrat,
primäre Hexylnitrate,
Ethyl-Hexylnitrat,
2-Ethoxyethylnitrat,
n-Heptylnitrat,
Isoamylnitrat,
Isopropylnitrat,
n-Octylnitrat,
2-Octylnitrat,
isomere Pentylnitrate,
Triethylenglykoldinitrat,
Tetraethylenglykoldinitrat,
Tetrahydrofurfurylnitrat,
Triethylammoniumnitrat, usw..

Dem Verbrennungs- Nachteil des relativ hohen Flammpunktes von pflanzlichen Oelen wird aber im erfindungsgemässem Gemisch auch insofern entgegengewirkt, als die Pflanzenölkomponente im gesamten erfindungsgemässen Dieselkraftstoffgemisch ein relativ geringer Anteil, vorteilhafterweise unter 20 Vol. %, einnimmt.

Für die Herstellung des erfindungsgemässen Dieselkraftstoffes wird zuerst ein Additiv hergestellt, das vorwiegend d.h. zu mindestens 90 Vol. % aus pflanzlichem Oel besteht. Diesem Oel wird anschliessend unter stetigem Rühren der Zündwilligkeitsverbesserer (unter 10 Vol. %) zugemischt. Wenn für die Zumischung des Zündwiligkeitsverbesserers nötig, kann auch noch ein Emulgator, zum Beispiel ein Fettalkohol, zugemischt werden. Das Additiv seinerseits wird dann in der gewünschten Konzentration (vorteilhafterweise unter 20 %) dem Dieselkraftstoff zugemischt, wobei darauf geachtet wird, dass ein homogenes, stabiles Gemisch entsteht. Bei der Verwendung von pflanzlichen Oelen für die Herstellung des Additivs ist deren chemische Zusammensetzung und damit auch das Herstellungsverfahren zu ihrer Produktion von Bedeutung. So haben wir für die Herstellung des erfindungsgemässen Additivs immer kaltgepresste Oele verwendet bei denen man vor Gebrauch sämtliche Partikel über 5 Mikron entfernt hat. Wichtig im Herstellungsverfahren bzw. für die Qualität der verwendeten pflanzlichen Oele ist zudem der Gehalt an Phosphat-haltigen Verbindungen der vorzugsweise unter 10 ppm liegen sollte. Besonders geeignet für die Herstellung des Additivs ist kalt-gepresstes, teilraffiniertes Raps- bzw. Rüböl.

Durch die Zumischung des Additivs können die Schmierwirkung und die Dichte des Kraftstoffes heraufgesetzt und gleichzeitig der Schwefelgehalt reduziert werden. Die Cetanzahl wird dabei nicht verändert, kann aber wenn angezeigt sogar erhöht werden. Dadurch ist es möglich einen für die Verbrennung, die Abgassituation und damit auch für die Umwelt optimalen Kraftstoff für konventionelle Dieselmotore zu formulieren.
Das im Folgenden aufgeführte Beispiel soll die Erfindung in keiner Weise einschränken. Für die Herstellung des erfindungsgemässen Kraftstoffes für Dieselmotoren wurde zum einen ein handelsüblicher mineralischer Diesel mit einem schlechten sog. HFR-2 (High frequency reciprocating) Wert verwendet. Zur Etablierung des HFR-2 Wertes wird eine 6 mm Stahlkugel mit einer genau bestimmten Frequenz, Zeitdauer, sowie definierter Last auf einem Stahlplättchen hin und her bewegt. Das ganze völlig in dem zu prüfenden Kraftstoff eingetaucht. Die daraus resultierende Verschleisskalotte an der Kugel wird dann als HFR-2 Verschleisskennwert angegeben. Gemäss der Norm ISO/CD 12156 ist gilt dieser Wert dann als schlecht, wenn die Verschleisskalotte im Test bei einer Prüftemperatur von 60° C grösser als 450 µm ist.
Um die Erhöhung der Schmierfähigkeit nachzuweisen haben wir dem Dieselkraftstoff 8 Vol. % des erfindungsgemässen Additivs zugegeben, das zu 99 Vol. % aus Rapsöl (Rüböl) und zu 1 Vol. % aus 2-Ethylhexylnitrat besteht. Der HFR-2 Wert des nichtadditivierten Diesel Kraftstoffes betrug 545 µm, seine Dichte bei 15° C 817,20 kg/m³. Nach dem Zusatz des erfindungsgemässen Additivs sank der HFR-2 Wert auf 240 µm und die Dichte stieg auf 825,23 kg/m³. Parallel dazu konnte die Schmierfilmdicke von 18,5 % auf 88 % erhöht werden.
Mit dem erfindungsgemässen Kraftstoffgemisch wurden Tausende von Kilometern mit indirekt eingespritzten Dieselmotoren und hunderte von Betriebsstunden mit direkt eingespritzten Dieselmotoren gefahren, ohne , dass es zu irgendwelchen erkenntlichen Störungen und Ablagerungen an Motoren gekommen wäre.

Der von uns vorgeschlagene Weg, entschwefeltem mineralischen Diesel- Kraftstoffen ein erfindungsgemässes Additiv zuzumischen unterscheidet sich von den heute bekannten Diesel-Kraftstoffen durch den bedeutend höheren Anteil an Additiv das vorwiegend aus einem erneuerbaren Rohstoff unter gleichzeitiger Zumischung eines Zündwilligkeitsverbesserers hergestellt wird. Von den neueren pflanzlichen Treibstoffen für Dieselmotore (RME und Pflanzenöl-Alkohol- Benzin Gemischen) unterscheidet er sich dadurch als dass der erfindungsgemässe Misch-Kraftstoff nach wie vor vorwiegend d.h. zu mindestens 51 Vol. % vorteilhafter weise zu über 80 Vol. % aus einer mineralischen Komponente besteht. Das Herstellungsverfahren ist äusserst kostengünstig. Der erfindungsgemässe Treibstoff stellt eine Verbesserung für die Umwelt dar, da die Haupt-Additiv Komponente aus einem nicht schwefelhaltigen, erneuerbaren Rohstoff hergestellt wird. Damit kann das Problem der sauer wirkenden Abgase weiter entschärft und zudem die Kohlendioxid Bilanz (Treibhauseffekt!) verbessert werden.

## Patentansprüche

1. Kraftstoff für Dieselmotoren auf Basis von mineralischen Kohlenwasserstoffen im Siedebreich von 170 - 360° C, dadurch gekennzeichnet, dass er von 0,1 - 49 Vol. % Triglyzeride pflanzlichen Ursprungs insbesondere pflanzliches fettes Oel enthält.

2. Kraftstoff für Dieselmotoren nach Anspruch 1, dadurch gekennzeichnet, dass er mindestens einen Zündwilligkeits- verbesserer zur Erhöhung der Cetanzahl enthält.

3. Kraftstoff für Dieselmotoren nach Anspruch 1 oder 2 dadurch gekennzeichnet dass darin der Zündwilligkeitsverbesserer in einem Anteil von 0,005 - 1 Vol. % enthalten ist.

4. Kraftstoff für Dieselmotoren nach einem der Ansprüche 1 bis 3, dadurch gekennzeichnet, dass das Triglyzerid mindestens ein Mitglied ist aus den Gruppen frisches oder gebrauchtes: Rapsöl, Sonnenblumenöl, Hanföl, Sojaöl, Baumwollsaatöl, Rizinusöl, Olivenöl, Leinöl, Leindotteröl, Maiskeimöl, Mandelöl, Palmkernöl, Kokosöl, Senföl, Erdnussöl und Purgieröl.

5. Kraftstoff für Dieselmotoren nach einem der Ansprüche 2 bis 4, dadurch gekennzeichnet, dass der Zündwilligkeitsverbesserer ausgewählt ist aus einer Gruppe von Nitratverbindungen zum Beispiel n-Butylnitrat, Cyclohexylnitrat, n-Decylnitrat, Diethylenglykoldinitrat, primäre Hexylnitrate, Ethylhexylnitrat, 2-Ethoxyethylnitrat, n-Heptylnitrat, Isoamylnitrat, Isopropylnitrat, n-Octylnitrat, 2-Octylnitrat, isomere Pentylnitrate, Triethylenglykoldinitrat, Tetraethylenglykoldinitrat, Tetrahydrofurfurylnitrat, Triethylammoniumnitrat.

6. Kraftstoff für Dieselmotoren nach einem der Ansprüche 1 bis 4 dadurch gekennzeichnet, dass er frei von Partikeln ist, die eine Grösse von 10 µm überschreiten.

7. Kraftstoff für Dieselmotoren nach einem der Ansprüche 1 bis 5 dadurch gekennzeichnet, dass der Gehalt der Triglyzeride an phosphathaltigen Verbindungen geringer ist als 30 ppm.

8. Additiv als Mittel zur Herstellung des Kraftstoffes für Dieselmotoren nach einem der Ansprüche 2 bis 7, dadurch gekennzeichnet, dass es mindestens 90 Vol. % Triglyzeride pflanzlichen Ursprungs zur Erhöhung der Schmierfähigkeit und einen Zündwilligkeitsverbesserer zur Erhöhung der Cetanzahl enthält.

9. Additiv gemäss Anspruch 8 dadurch gekennzeichnet, dass der Zündwilligkeitsverbesserer in einem Anteil von 0,1 - 10 Vol % enthalten ist.

10. Additiv nach Anspruch 7 oder 8 dadurch gekennzeichnet, dass das Triglyzerid mindestens ein Mitglied ist welches ausgewählt ist aus der Gruppe frisches, oder gebrauchtes: Rapsöl, Sonnenblumenöl, Hanföl, Sojaöl, Baumwollsaatöl, Rizinusöl, Olivenöl, Leinöl, Leindotteröl, Maiskeimöl, Mandelöl, Palmkernöl, Kokosöl, Senföl, Erdnussöl und Purgieröl.

11. Additiv nach einem der Ansprüche 8 bis 10 dadurch gekennzeichnet, dass der Zündwilligkeitsverbesserer ausgewählt ist aus einer Gruppe von Nitratverbindungen zum Beispiel Butylnitrat, Cyclohexylnitrat, n-Decylnitrat, Diethylenglykoldinitrat, primäre Hexylnitrate, EthylHexylnitrat, 2-Ethoxyethylnitrat, n-Heptylnitrat, Isoamylnitrat, Isopropylnitrat, n-Octylnitrat, 2-Octylnitrat, isomere Pentylnitrate, Triethylenglykoldinitrat, Tetraethylenglykoldinitrat, Tetrahydrofurfurylnitrat, Triethylammoniumnitrat.

12. Additiv nach einem der Ansprüche 8 bis 11 dadurch gekennzeichnet, dass es frei von Partikeln ist, die eine Grösse von 10 µm überschreiten.

13. Additiv nach einem der Ansprüche 8 bis 12 dadurch gekennzeichnet, dass der Gehalt der Triglyzeride an phosphathaltigen Verbindungen kleiner ist als 30 ppm.
